# EUROPEAN PATENT SPECIFICATION

(11) **EP 1 021 384 B1**
(45) Date of publication and mention of the grant of the patent: **21.11.2001**
(21) Application number: 98940478.5
(22) Date of filing: 04.09.1998
(51) Int. Cl.: C04B 11/02

(54) **RECLAMATION OF GYPSUM MATERIALS**
RÜCKGEWINNUNG VON GIPSMATERIALIEN
RECUPERATION DE GYPSE BRUT

(30) Priority: 06.09.1997 GB 9718886
(43) Date of publication of application: 26.07.2000
(73) Proprietor: Caso Limited, Harrogate, North Yorkshire HG1 5AN (GB)
(72) Inventor: O'BRIEN, Patrick, Graham, Harrogate North Yorkshire H91 5AH (GB); SCHOFIELD, Clive, Martin, Harrogate North Yorkshire H91 5AH (GB)
(74) Representative: Sales, Robert Reginald
(86) International application number: GB9802679
(87) International publication number: WO9912861

(56) References cited:
- GB-A- 1 092 233
- SE-C- 119 024
- US-A- 4 842 842
- US-A- 4 919 613

## Description

This invention concerns a method of reclaiming gypsum materials and especially plaster of paris, and particularly but not exclusively plaster of paris from the pottery and sanitary ware industries and also apparatus for carrying out such a method.

A considerable amount of waste plaster of paris is produced in the pottery and sanitary ware industries. Much of this plaster of paris has been used previously as moulds during the forming of ware by slip casting or other techniques. Conventionally this waste product has been disposed of in land fill sites and the like. This is becoming uneconomic due to the increasing cost of gypsum and particularly the working out of some sources of gypsum, and also the introduction of land fill taxes and the like. Waste gypsum materials are also produced in sugar refining and from desulpurisation processes in the power generation industry.

The term "gypsum materials" is to be understood as including raw gypsum which may have been used in filtration, desulphurisation or other processes, as well as plaster of paris.

According to the present invention there is provided a method of reclaiming gypsum materials, the method comprising heating used gypsum materials to a temperature of between 200 and 260°C to form soluble anhydrite, quenching the anhydrite, retaining the anhydrite in an aqueous solution until the dihydrate is formed.

The used gypsum material is preferably heated to a temperature of between 220 and 240°C. The used gypsum material is preferably heated for at least eight hours and desirably for substantially twelve hours. The used gypsum material may be heated in a rotary calciner.

The quenching is preferably achieved by mixing with water, and desirably immediately after exiting the rotary calciner.

The used gypsum material is preferably reduced in size prior to heating, and may be crushed and/or milled.

The anhydrite may be retained in an aqueous solution for a number of hours, and preferably at least 16, and desirably in the order of 72 hours. The aqueous solution may be weakly acidic, and may comprise succinic acid, for example in a concentration of 0.25%.

The anhydrite may be held in a vessel and the aqueous solution pumped therethrough to permit impurities to be removed.

The invention also provides a method of reclaiming plaster of pairs, the method being according to any of the preceding six paragraphs, and the dihydrate is subsequently heated to form the hemihydrate.

The dihydrate is preferably heated to a temperature of between 150 and 190°C, and desirably to a temperature of substantially 170°C. The dihydrate may be ground to provide a required particle size distribution. The dihydrate may be simultaneously dried and ground, for example in an atritor. Alternatively the dihydrate may be flash dried, and may be heated in a rotary calciner.

The hemihydrate may be modified ("aged") to increase blending times. This may be accomplished by the use of additives which may include keratin or salt, and the additives may be added to the plaster of paris prior to the initial heating.

Alternatively, modification of the hemihydrate may be carried out using a steam generated fluidized bed.

The invention further provides apparatus for carrying out a method according to any of the preceding eleven paragraphs.

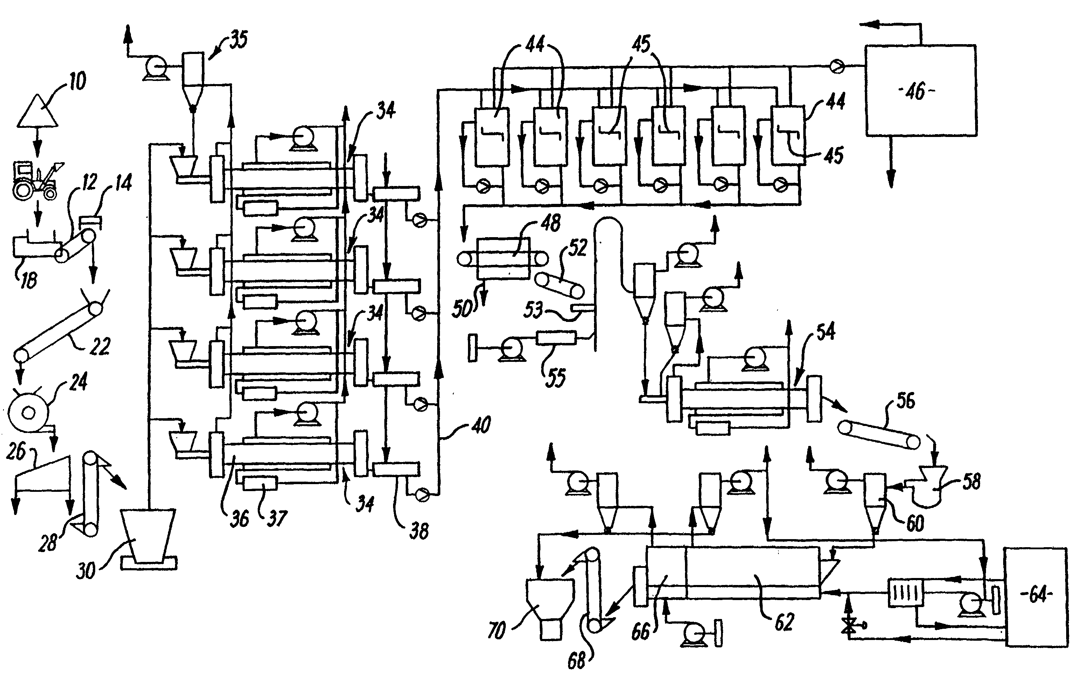

An embodiment of the present invention will now be described by way of example only with reference to the single figure of the accompanying drawings which is a block diagram of a plant according to the present invention and usable with a method according to the present invention.

Referring to the drawings, a stock pile 10 for old plaster of paris moulds from the pottery industry is provided from which moulds can be shovelled into a jaw crusher 18. A conveyor 12 leads from the crusher 18 past a metal detector 14 for removing metal natches and other metal impurities from the plaster. An elevator 22 leads from the detector 14 to a hammer mill 24 provided with a dust extractor. The mill 24 is set to provide a 3mm size grade. A vibrating screen 26 is provided after the mill 24 to remove non-metallic natches and any other foreign bodies.

An elevator 28 leads from the screen 26 to a buffer hopper and feed system 30. The system 30 feeds material into four parallel rotary calciners 34 with combustion chambers 36 and burners 37. The calciners operate at 230°C and retain material within for twelve hours. Within the calciners 34 water is driven off the plaster of paris to form soluble anhydrite. A bag filter arrangement 35 is provided for the calciners 34. The output from each calciner 34 leads to a respective rehydration mixer 38 where the calcined material is quenched as it is mixed with water.

An elevator 40 leads from the mixer 38 to six parallel recrystallisation tanks 44, each containing an impellor 45. The anhydrite is held in the tanks 44 for approximately seventy two hours whilst it converts to the dihydrate. It has sometimes been found useful for the solutions within the tanks 44 to be weakly acidic and a solution of succinic acid for example of a concentration of 0.25% has been found to be advantageous, particularly in reducing the required retention time in the tanks 44. The solutions in the tanks 44 are preferably pumped therethrough to permit impurities to be removed. Waste water from the tanks 44 passes to a water treatment plant 46.

The tanks 44 lead to a belt type vacuum filter 48. The liquid from the filter 48 passes out via an outlet 50 to the plant 46. The solid dihydrate from the filter 48 passes over a vibrating conveyor 52 to a thermoventuri dryer 53 with a burner 55. In the dryer 53 the material is flash dried. From the dryer 53 material is taken to a further rotary calciner 54. The calciner 54 holds material therein for 2 hours and operates at 170°C to convert the dihydrate to hemihydrate.

The output from the calciner 54 passes via a conveyor 56 to a micro mill 58 and then filter 60. From the filter 60 the hemihydrate passes for modification into a steam generated fluidized bed 62. The bed 62 is fed with steam from a boiler 64. Material from the bed 62 passes into a cooler 66 and then via an elevator 68 to a bagging plant 70.

The modification of the plaster of paris provided by the bed 62 is generally found to be preferable to that provided by additives. It is to be realised that this modification could be used in different processes and with virgin plaster of paris.

There is thus described a method for recycling plaster of paris, and a suitable apparatus for carrying this out. Whilst this method is described in relation to pottery moulds. The moulds could be sanitary ware moulds or others. The apparatus is of relatively conventional construction and can thus be inexpensively constructed and operated. The products of such process have been found in general to have superior and more consistent characteristics than virgin plaster of paris.

Various modifications may be made without departing from the scope of the invention. For example a different plant could be used than that described above. An atritor could be used rather than the second caliciner. The plaster of paris may alternatively be modified using additives such as keratin and salt, and these could be added prior to the calcination.

The invention can also be used to reclaim other gypsum materials. For instance raw gypsum as used for example in sugar refining or for desulphurisation in the power generation industry. With raw gypsum the subsequent heating of the dihydrate is not required, and reclaimed gypsum sand will have been obtained at this point.

## Claims

1. A method of reclaiming gypsum materials, the method comprising heating used plaster gypsum material to a temperature of between 200 and 260°C to form soluble anhydrite, quenching the anhydrite, retaining the anhydrite in an aqueous solution until the dihydrate is formed.

2. A method according to claim 1, **characterised in that** the used gypsum material is heated to a temperature of between 220 and 240°C.

3. A method according to claims 1 or 2, **characterised in that** the used gypsum material is heated for at least eight hours.

4. A method according to claim 3, **characterised in that in that** the used gypsum material is heated for substantially twelve hours.

5. A method according to any of the preceding claims, **characterised in that** the used gypsum material is heated in a rotary calciner.

6. A method according to any of the preceding claims, **characterised in that** the quenching is preferably achieved by mixing with water.

7. A method according to claim 6 when dependent on claim 5, **characterised in that** the quenching is preferably achieved by mixing with water immediately after exiting the rotary calciner.

8. A method according to any of the preceding claims, **characterised in that** the used gypsum material is reduced in size prior to heating.

9. A method according to claim 8, **characterised in that** the used gypsum material is crushed and/or milled.

10. A method according to any of the preceding claims, **characterised in that** the anhydrite is retained in an aqueous solution for a number of hours.

11. A method according to claim 10, **characterised in that** the anhydrite is retained in an aqueous solution for at least 16 hours.

12. A method according to claim 11, **characterised in that** the anhydrite is retained in an aqueous solution for in the order of 72 hours.

13. A method according to any of the preceding claims, **characterised in that** the aqueous solution is weakly acidic.

14. A method according to claim 13, **characterised in that** the aqueous solution comprises succinic acid.

15. A method according to claim 14, **characterised in that** the concentration of succinic acid is 0.25%.

16. A method according to any of the preceding claims, **characterised in that** the anhydrite is held in a vessel and the aqueous solution pumped therethrough to permit impurities to be removed.

17. A method of reclaiming plaster of paris, **characterised in that** the method is according to any of the preceding claims, and the dihydrate is subsequently heated to form the hemihydrate.

18. A method according to claim 17, **characterised in that** the dihydrate is heated to a temperature of between 150 and 190°C.

19. A method according to claim 18, **characterised in that** the dihydrate is heated to a temperature of substantially 170°C.

20. A method according to any of claims 17 to 19, **characterised in that** the dihydrate is ground to provide a required particle size distribution.

21. A method according to claim 20, **characterised in that** the dihydrate is simultaneously dried and ground.

22. A method according to any of claims 17 to 20, **characterised in that** the dihydrate is flash dried.

23. A method according to any of claims 17 to 22, **characterised in that** the dihydrate is heated in a rotary calciner.

24. A method according to claims 17 to 23, **characterised in that** the hemihydrate is modified ("aged") to increase blending times.

25. A method according to claim 24, **characterised in that** the hemihydrate is modified by the use of additives which may include keratin or salt.

26. A method according to claim 25, **characterised in that** the additives are added to the plaster of paris prior to the initial heating.

27. A method according to claim 24, **characterised in that** the hemihydrate is modified using a steam generated fluidized bed.

## Patentansprüche

1. Verfahren zur Rückgewinnung von Gipsmaterialien mit den folgenden Schritten: Erhitzen von gebrauchtem Verputzungs-Gipsmaterial auf eine Temperatur von 200 bis 260°C, um löslichen Anhydrit zu bilden; Abschrecken des Anhydrits; und Halten des Anhydrits in einer wässrigen Lösung bis das Dihydrat gebildet ist.

2. Verfahren nach Anspruch 1, **dadurch gekennzeichnet, daß** das gebrauchte Gipsmaterial auf eine Temperatur von 220 bis 240°C erhitzt wird.

3. Verfahren nach Anspruch 1 oder 2, **dadurch gekennzeichnet, daß** das gebrauchte Gipsmaterial über mindestens acht Stunden erhitzt wird.

4. Verfahren nach Anspruch 3, **dadurch gekennzeichnet, daß** das gebrauchte Gipsmaterial über im wesentlichen zwölf Stunden hinweg erhitzt wird.

5. Verfahren nach einem der vorhergehenden Ansprüche, **dadurch gekennzeichnet, daß** das gebrauchte Gipsmaterial in einem Dreh-Kalzinierofen erhitzt wird.

6. Verfahren nach einem der vorhergehenden Ansprüche, **dadurch gekennzeichnet, daß** das Abschrecken vorzugsweise durch Mischen mit Wasser erzielt wird.

7. Verfahren nach Anspruch 6 und 5, **dadurch gekennzeichnet, daß** das Abschrecken vorzugsweise durch Mischen mit Wasser unmittelbar nach dem Verlassen des Dreh-Kalzinierofens erzielt wird.

8. Verfahren nach einem der vorhergehenden Ansprüche, **dadurch gekennzeichnet, daß** das gebrauchte Gipsmaterial vor dem Erhitzen zerkleinert wird.

9. Verfahren nach Anspruch 8, **dadurch gekennzeichnet, daß** das gebrauchte Gipsmaterial zermalmt und/oder zermahlen wird.

10. Verfahren nach einem der vorhergehenden Ansprüche, **dadurch gekennzeichnet, daß** der Anhydrit über mehrere Stunden hinweg in einer wässrigen Lösung gehalten wird.

11. Verfahren nach Anspruch 10, **dadurch gekennzeichnet, daß** der Anhydrit über mindestens 16 Stunden hinweg in einer wässrigen Lösung gehalten wird.

12. Verfahren nach Anspruch 11, **dadurch gekennzeichnet, daß** der Anhydrit über etwa 72 Stunden hinweg in einer wässrigen Lösung gehalten wird.

13. Verfahren nach einem der vorhergehenden Ansprüche, **dadurch gekennzeichnet, daß** die wässrige Lösung schwach sauer ist.

14. Verfahren nach Anspruch 13, **dadurch gekennzeichnet, daß** die wässrige Lösung Succinsäure (Bernsteinsäure) enthält.

15. Verfahren nach Anspruch 14, **dadurch gekennzeichnet, daß** die Konzentration der Succinsäure 0,25% beträgt.

16. Verfahren nach einem der vorhergehenden Ansprüche, **dadurch gekennzeichnet, daß** der Anhydrit in einem Gefäß gehalten und die wässrige Lösung hindurchgepumpt wird, um das Entfernen von Verunreinigungen zu ermöglichen.

17. Verfahren zur Rückgewinnung von Modell-Gips, **dadurch gekennzeichnet, daß** das Verfahren nach einem der vorhergehenden Ansprüche durchgeführt wird und das Dihydrat anschließend erhitzt wird, um Halbhydrat zu bilden.

18. Verfahren nach Anspruch 17, **dadurch gekennzeichnet, daß** das Dihydrat auf eine Temperatur zwischen 150 und 190°C erhitzt wird.

19. Verfahren nach Anspruch 18, **dadurch gekennzeichnet, daß** das Dihydrat auf eine Temperatur von im wesentlichen 170°C erhitzt wird.

20. Verfahren nach einem der Ansprüche 17 bis 19, **dadurch gekennzeichnet, daß** das Dihydrat gemahlen wird, um eine erforderliche Teilchen-Größenverteilung zu erzeugen.

21. Verfahren nach Anspruch 20, **dadurch gekennzeichnet, daß** das Dihydrat gleichzeitig getrocknet und gemahlen wird.

22. Verfahren nach einem der Ansprüche 17 bis 20, **dadurch gekennzeichnet, daß** das Dihydrat schnellgetrocknet wird.

23. Verfahren nach einem der Ansprüche 17 bis 22, **dadurch gekennzeichnet, daß** das Dihydrat in einem Dreh-Kalzinierofen erhitzt wird.

24. Verfahren nach Anspruch 17 bis 23, **dadurch gekennzeichnet, daß** das Halbhydrat modifiziert ("gealtert") wird, um die Mischzeiten zu erhöhen.

25. Verfahren nach Anspruch 24, **dadurch gekennzeichnet, daß** das Halbhydrat unter Verwendung von Additiven modifiziert wird, die Keratin oder Salz enthalten können.

26. Verfahren nach Anspruch 25, **dadurch gekennzeichnet, daß** die Additive zu dem Modell-Gips vor dem anfänglichen Erhitzen hinzugegeben werden.

27. Verfahren nach Anspruch 24, **dadurch gekennzeichnet, daß** das Halbhydrat modifiziert wird, indem ein durch Dampf erzeugtes Fließbett verwendet wird.

## Revendications

1. Procédé de régénération de produits de gypse, ce procédé consistant à chauffer le produit de gypse constituant la base d'un plâtre utilisé, à une température comprise entre 200 et 260°C pour former de l'anhydrite soluble, à refroidir l'anhydrite, et à maintenir l'anhydrite dans une solution aqueuse jusqu'à formation de dihydrate.

2. Procédé selon la revendication 1, **caractérisé en ce que** le produit de gypse utilisé est chauffé à une température comprise entre 220 et 240°C.

3. Procédé selon la revendication 1 ou 2, **caractérisé en ce que** le produit de gypse utilisé est chauffé pendant au moins huit heures.

4. Procédé selon la revendication 3, **caractérisé en ce que** le produit de gypse utilisé est chauffé sensiblement pendant douze heures.

5. Procédé selon l'une quelconque des revendications précédentes, **caractérisé en ce que** le produit de gypse utilisé est chauffé dans un four à calcination rotatif.

6. Procédé selon l'une quelconque des revendications précédentes, **caractérisé en ce que** le refroidissement est généralement assuré par mélange avec de l'eau.

7. Procédé selon la revendication 6 lorsqu'elle dépend de la revendication 5, **caractérisé en ce que** le refroidissement est de préférence réalisé par mélange avec de l'eau immédiatement à la sortie du four à calcination rotatif.

8. Procédé selon l'une quelconque des revendications précédentes, **caractérisé en ce que** la taille du produit de gypse utilisé est réduite avant le chauffage.

9. Procédé selon la revendication 8, **caractérisé en ce que** le produit de gypse utilisé est concassé et/ou broyé.

10. Procédé selon l'une quelconque des revendications précédentes, **caractérisé en ce que** l'anhydrite est maintenue dans une solution aqueuse pendant un certain nombre d'heures.

11. Procédé selon la revendication 10, **caractérisé en ce que** l'anhydrite est maintenue dans une solution aqueuse pendant au moins 16 heures.

12. Procédé selon la revendication 11, **caractérisé en ce que** l'anhydrite est retenue en solution aqueuse pendant environ 72 heures.

13. Procédé selon l'une quelconque des revendications précédentes, **caractérisé en ce que** la solution aqueuse est légèrement acide.

14. Procédé selon la revendication 13, **caractérisé en ce que** la solution aqueuse comprend de l'acide succinique.

15. Procédé selon la revendication 14, **caractérisé en ce que** la concentration de l'acide succinique est de 0,25%.

16. Procédé selon l'une quelconque des revendications précédentes, **caractérisé en ce que** l'anhydrite est maintenue dans une cuve et la solution aqueuse est pompée dans cette dernière pour assurer le retrait des impuretés.

17. Procédé de régénération du plâtre de moulage, **caractérisé en ce que** ce procédé est tel que défini dans l'une quelconque des revendications précédentes, et que le dihydrate est ultérieurement chauffé pour former de l'hémihydrate.

18. Procédé selon la revendication 17, **caractérisé en ce que** le dihydrate est chauffé à une température comprise entre 150 et 190°C.

19. Procédé selon la revendication 18, **caractérisé en ce que** le dihydrate est chauffé à une température sensiblement égale à 170°C.

20. Procédé selon l'une quelconque des revendications 17 à 19, caractérisé ce que le dihydrate est broyé pour obtenir la composition granulométrique requise.

21. Procédé selon la revendication 20, **caractérisé en ce que** le dihydrate est simultanément séché et broyé.

22. Procédé selon l'une quelconque des revendications 17 à 20, **caractérisé en ce que** le dihydrate est séché selon un système ultra-rapide.

23. Procédé selon l'une quelconque des revendications 17 à 22, **caractérisé en ce que** le dihydrate est chauffé dans un four à calcination rotatif.

24. Procédé selon les revendications 17 à 23, **caractérisé en ce que** l'hémihydrate est modifié ("vieilli") pour augmenter les temps de mélange.

25. Procédé selon la revendication 24, **caractérisé en ce que** l'hémihydrate est modifié à l'aide d'additifs qui peuvent comprendre de la kératine ou du sel.

26. Procédé selon la revendication 25, **caractérisé en ce que** les additifs sont ajouté au plâtre de Paris avant le chauffage initial.

27. Procédé selon la revendication 24, **caractérisé en ce que** l'hémihydrate est modifié à l'aide d'un four à lit fluidisé à vapeur.
